(19) Europäisches Patentamt
European Patent Office
Office européen des brevets

(11) Publication number: **0 398 043 A2**

(12) **EUROPEAN PATENT APPLICATION**

(21) Application number: **90107731.3**

(51) Int. Cl.5: **C08L 71/12, C08L 77/00**

(22) Date of filing: **24.04.90**

(30) Priority: **16.05.89 JP 120482/89**

(43) Date of publication of application: **22.11.90 Bulletin 90/47**

(84) Designated Contracting States: **DE ES FR GB IT NL**

(71) Applicant: **JAPAN G.E. PLASTIC CO., LTD.**
**2-7-1 Nihonbashihoncho**
**Chuo-ku, Tokyo-to(JP)**

(72) Inventor: **Ishida, Hiromi (NMN)**
**2-2 Kinugaoka**
**Mooka-shi, Tochigi-ken(JP)**
Inventor: **Kodaira, Satoshi (NMN)**
**2-2 Kinugaoka**
**Mooka-shi, Tochigi-ken(JP)**

(74) Representative: **Catherine, Alain**
**General Electric France Service de Propriété Industrielle 18 Rue Horace Vernet**
**F-92136 Issy-Les-Moulineaux Cedex(FR)**

# (54) Resin composition which contains polyphenylene ether and polyamide.

(57) Resin composition containing polyphenylene ether and polyamide which exhibits excellent low temperature impact resistance.

The resin composition contains (a) 5-80 parts by weight of a polyphenylene ether resin; (b) 95-20 parts by weight of a polyamide resin; and (c) 1-80 parts by weight of a rubbery polymer, with respect to 100 parts by weight of the combined weights of said components (a) and (b), said rubbery polymer containing at least 40% by weight of vinyl aromatic units.

EP 0 398 043 A2

The present invention concerns a resin composition which contains polyphenylene ether and polyamide and which exhibits excellent low-temperature impact resistance.

Since polyphenylene ether exhibits excellent mechanical properties and electrical properties, it is useful as a molding material resin. The oil resistance of said resin, however, is inferior. To alleviate this problem, attempts have been made to mix polyphenylene ether with polyamide, which has excellent oil resistance (e.g., Japanese Kokai Patent No. Sho 56[1981]-16525). Since the mutual miscibility between the polyphenylene ether and polyamide is inferior, a molded product derived from the resulting resin composition fails to exhibit properties characteristic of the two resins (e.g., mechanical properties, etc.). To alleviate this problem, attempts have been made to add a special compound (e.g., maleic anhydride, etc.) to improve the impact resistance while an improved oil resistance is being sustained (see Japanese Kokai Patent No. Sho 56[1981]-26913).

Even if such a miscibility enhancer is added, however, it is impossible to obtain a sufficiently high impact resistance. Only when an impact resistance enhancer is also added, can excellent impact resistance be obtained.

The resulting composition exhibits a sufficiently high stretching efficiency when a normal-temperature impact resistance test is carried out. When a low-temperature impact resistance test is carried out, however, the stretching efficiency is significantly low. When said composition is used for purposes which require adequate low-temperature properties, therefore, there are still problems which must be solved. To improve the low-temperature impact resistance (i.e., stretching efficiency), attempts have been made to add a block copolymer consisting of a polystyrene block and a rubbery polymer block (e.g., SBS, SEBS, SEP, etc.). If the quantity of the block copolymer is increased to improve the low-temperature impact resistance, however, the rigidity of the molded product significantly declines.

The foremost objective of the present invention is to provide a resin composition which contains polyphenylene ether and polyamide and which yields a molded product which exhibits excellent low-temperature impact resistance and minimal rigidity loss.

The present invention was completed after it had been discovered that, if a special rubbery polymer is mixed with a resin composition which contains polyphenylene ether and polyamide, the low-temperature impact resistance is significantly improved without adversely affecting the excellent properties of said resin composition (especially the rigidity).

The aforementioned objective of the present invention is attained using a resin composition with the following characteristics. In a resin composition which contains (a) 5-80 parts by weight of a polyphenylene ether resin, (b) 95-20 parts by weight of a polyamide resin, and (c) 1-80 parts by weight of a rubbery polymer (with respect to 100 parts by weight of the combined weights of said components (a) and (b)), said rubbery polymer contains at least 40 wt% of vinyl aromatic units.

As polyphenylene ether component (a) of the present invention, conventional resins can be used. For example, polymers represented by the following general formula A:

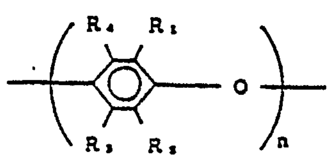
(A)

(in which $R_1$, $R_2$, $R_3$, and $R_4$ are monovalent substituents selected from among a hydrogen atom, halogen atoms, alkyl groups, alkoxy groups, and haloalkyl or haloalkoxy groups in which at least two carbon atoms are present between a halogen atom and a phenyl ring and in which no tertiary α-carbon is present; n is an integer pertaining to the degree of polymerization) can be used. Not only homopolymers consisting of one of the polymers represented by the aforementioned general formula but also copolymers consisting of two or more polymer components can be used. Especially desirable results are obtained if $R_1$ and $R_2$ are alkyl groups containing 1-4 carbon atoms and if $R_3$ and $R_4$ are hydrogen atoms or alkyl groups containing 1-4 carbon atoms. Concrete examples of such polymers include poly(2,6-dimethyl-1,4-phenylene) ether, poly-(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, etc. An especially desirable polyphenylene ether resin is poly(2,6-dimethyl-1,4-phenylene) ether. As a polyphenylene ether copolymer, a copolymer in which the aforementioned polyphenylene ether repeating unit is partially substituted with an alkyl-tri-substituted phenol (e.g., 2,3,6-trimethylphenol, etc.) can be used. It is also possible to use a copolymer in which a styrene compound is grafted with said polyphenylene ether. As

such a styrene-grafted polyphenylene ether, a copolymer obtained by graft-polymerizing a styrene compound (e.g., styrene, α-methylstyrene, vinyltoluene, chlorostyrene, etc.) with the aforementioned polyphenylene ether can be appropriately used.

An especially desirable polyphenylene ether used in the present invention contains $C_1$-$C_4$ alkyl substituents at two o-positions to an oxygen ether atom. Concrete examples of such polymers include poly-(2,6-dimethyl-1,4-phenylene) ether, poly(2,6-diethyl-1,4-phenylene) ether, poly(2-methyl- 6-ethyl-1,4-phenylene) ether, poly(2,6-dipropyl-1,4-phenylene) ether, poly(2-ethyl-6-propyl-1,4-phenylene) ether, etc.

The quantity of the aforementioned polyphenylene ether resin with respect to [sic] the resin composition of the present invention should be 5-80 parts by weight, preferably 20-70 parts by weight.

As polyamide resin component (b) of the present invention, polyamides which contain amino acids, lactams, or diamines and dicarboxylic acid as main constituent components can be appropriately used. Concrete examples of said constituent components include lactams (e.g., ε-caprolactam, enantolactam, ω-laurolactam, etc.), amino acids (e.g., ε-aminocaproic acid, 11-aminoundecanic acid, 12-aminododecanic acid, etc.), diamines (e.g., tetramethylenediamine, hexamethylenediamine, undecamethylenediamine, dodecamethylenediamine, 2,2,4-/2,4,4-trimethylhexamethylenediamine, 5-methylnonamethylenediamine, m-xylenediamine, p-xylenediamine, 1,3-bisaminomethylcyclohexane, 1,4-bisaminomethylcyclohexane, bis-p-aminocyclohexylmethane, bis-p-aminocyclohexylpropane, isophoronediamine, etc.), and dicarboxylic acids (e.g., adipic acid, suberic acid, azelaic acid, sebacic acid, dodecanedicarboxylic acid, 1,4-cyclohexanedicarboxylic acid, 1,3-cyclohexanedicarboxylic acid, terephthalic acid, isophthalic acid, naphthalenedicarboxylic acid, dimeric acid, etc.). The aforementioned constituent components may be polymerized either alone or in combinations of two or more, and the resulting polyamide homopolymers and copolymers can be equally used in the present invention. Concrete examples of especially useful polyamides used in the present invention are polycaproamide (nylon 6), polyhexamethylenadipamide (nylon 66), polyhexamethylenesebacamide (nylon 610), polyundecanamide (nylon 11), polydodecanamide (nylon 12), and copolymers or mixtures of the aforementioned polyamides.

The terminal groups of the aforementioned polyamides are usually blocked to control the melt viscosity and to enhance the thermal stability. Generally speaking, the molar ratio of terminal carboxyl groups with respect to terminal amino groups ("terminal group ratio" below) is 1 or below. As the polyamide of the present invention, however, polymers with terminal group ratios of above 1 are desirable (although polymers with lower values can also be used). Such a polyamide can be manufactured by adding an excess of a compound which has a group which can be reacted with carboxyl groups (e.g., diamine, etc.) during a polyamide-polymerizing process. In an alternative format, a polyamide obtained by polymerization is reacted with a compound which has a group which can be reacted with a carboxyl group. If a polyamide with a terminal group ratio of above 1 is used, the physical appearance and physical strength of the resulting molded product are significantly improved as compared with when a polyamide with a terminal group ratio of 1 or below is used. The theoretical foundation of such a difference has yet to be found, but when an electron micrograph of the aforementioned molded product is examined, fine and homogeneous polyphenylene oxide particles are dispersed in the polyamide matrix. It is truly amazing that such a tremendous difference is observed based solely on the polyamide terminal group ratio difference. Especially desirable results are obtained if the terminal group ratio is 1.1 or above, preferably 1.3 or above.

The quantity of polyamide should be 20-95 parts by weight, preferably 30-80 parts by weight, [with respect to 100 parts by weight] of the resin composition of the present invention.

The rubbery polymer used in the present invention must contain at least 40 wt%, more preferably at least 50 wt%, or most preferably less than 70 wt%, of vinyl aromatic units. If the present rubbery polymer is used, the low-temperature impact resistance of a molded product derived from the present resin composition can be significantly improved while the rigidity loss is minimized.

The rubbery polymer used in the present invention should be of types (a) and (b) below: (a) ABA-type or ABA′-type copolymer (or their combination); (b) AB die-type block copolymer.

In the aforementioned types, A and A′ are blocks derived from vinyl aromatic compounds (e.g., styrene, α-methylstyrene, vinyltoluene, vinylxylene, vinylnaphthalene, etc.) or their mixtures. B is a block derived from diene compounds (e.g., butadiene, chlorobutadiene, isoprene, 1,3-pentadiene, 2,3-dimethylbutadiene, etc.) or their mixtures.

The ABA-type or ABA′-type copolymer is a so-called "tapered" block copolymer, in which three blocks are connected directly or by a "random copolymer" consisting of an alkenyl aromatic and a diene compound constituting each block, or a radial teleblock copolymer of an alkenyl aromatic and a diene compound. The AB die-type block copolymer is a "tapered" block copolymer in which two blocks are connected directly or by a "random copolymer" of an alkenyl aromatic and a diene compound constituting each block.

Concrete examples of especially desirable rubbery polymers corresponding to the aforementioned type (a) include a styrene-ethylene-butadiene-styrene block copolymer, styrene-butadiene-styrene block copolymer, styrene-isoprene-styrene block copolymer, etc. Concrete examples of especially rubbery polymers corresponding to the aforementioned type (b) include a styrene-ethylene-propylene block copolymer, styrene-butadiene block copolymer, etc.

Especially desirable results are obtained if the styrene-ethylene block copolymer is used.

The aforementioned rubbery polymers may be [totally] hydrogenated, partially hydrogenated, or acid-modified using maleic anhydride, etc. In particular, hydrogenated polymers are especially desirable for thermal aging resistance.

Various rubbery polymers are mentioned in Japanese Kokai Patent No. Sho 63[1988]-245453 (as well as literature quoted in said patent publication). Said rubbery polymers, however, are not used in a polyphenylene ether-polyamide composition, and no attempts are made to improve the low-temperature impact resistance of said compositions in these cases.

In addition to the aforementioned components, the resin composition of the present invention may also contain miscibility enhancers for polyphenylene ether and polyamide. Concrete examples of especially desirable miscibility enhancers include polycarboxylic acids (e.g., citric acid, malic acid, etc.) or their derivatives, compounds which contain (a) intramolecular double bonds or triple bonds and (b) intramolecular carboxyl groups, acid anhydride groups, acid amido groups, imido groups, carboxylic acid ester groups, or epoxy groups (e.g., maleic anhydride, etc.), trimellitic chloride anhydride, etc. These miscibility enhancers may be used either alone or in combinations of two or more. In some cases, said miscibility enhancers may also be used with peroxides. The quantity of said miscibility enhancer with respect to the resin composition of the present invention should be 0.01-10 parts by weight.

Concrete examples of methods for enhancing the miscibility between polyphenylene ether and polyamide include a method in which a miscibility enhancer is simply added and mixed, a method in which polyphenylene ether is first reacted with and modified by citric acid, maleic anhydride, etc. and then mixed with polyamide, etc. If the polyphenylene ether is modified using trimellitic chloride anhydride, a chlorine receiver (e.g., metal oxide, etc.) should be added.

In addition to the aforementioned components, the resin composition of the present invention may also contain resins which are miscible with polyphenylene ether (e.g., polystyrene, etc.).

When the resin composition of the present invention is mixed or molded, furthermore, various additives (e.g., pigments, dyes, reinforcements, fillers, heat resistance enhancers, antioxidants, weather resistance enhancers, lubricants, mold-release agents, crystalline nucleating agents, plasticizers, flame retardants, fluidity enhancers, antistatic agents, etc.) may be used as long as these additives exert no adverse effects on the properties of the composition.

Since the resin composition of the present invention has excellent fluidity, it can be molded by all conceivable molding methods (e.g., injection-molding method, blow-molding method, extrusion-molding method, etc.), and the resulting molded product exhibits excellent impact resistance (preferably low-temperature impact resistance) as well as superb heat resistance, water resistance, and dimensional stability. Said molded product is especially desirable as automotive exterior components (e.g., fenders, door panels, quarter panels, pumpers, spoilers, wheel caps, fuel caps, side shields, etc.) and general mechanical components.

There are no special restrictions on procedures for manufacturing the resin composition of the present invention. Thus, ordinary procedures can be used. Especially desirable results are obtained in the melt-mixing method. There are no special restrictions on the melt-mixing temperature and time, and these factors can be optimized for the material composition. The optimum temperature depends somewhat on the polyphenylene ether/polyamide mixing ratio, but generally speaking, the temperature should be 270-350 °C. A long time and/or high shearing rate are desirable during the mixing process, but then, the degradation of the resin composition is accelerated. The mixing time, therefore, must be selected considering these factors.

Arbitrary melt-mixing methods can be used as long as viscous molten masses can be appropriately treated. Both the batch and continuous formats can be used. Concrete examples of mixing apparatuses include an extruder, Banbury mixer, roller, kneader, etc.

All components may be added directly to a single treatment system or polymer [sic]. Other components of the polymer may be added to the treatment system both directly and simultaneously, or certain additives may be premixed [sic].

The contents of the present invention will be explained below in further detail with reference to application examples.

As polyphenylene ether, a poly(2,6-dimethyl-1,4-phenylene) ether with a specific viscosity (in chloroform at 25 ° C) of 0.48 dL/g was used.

As polyamide, nylon-6 (Nylon Resin A8030A, trademark of Unitika Co.) was used.

As a rubbery polymer, a styrene-ethylene-propylene block copolymer (SEP) was used. More specifically, SEP-A, which contains 50 wt% of styrene units, was used in the application examples of the present invention, but SEP-B, which contains 35 wt% of styrene units, was used in the comparative examples.

Citric acid was used as a miscibility enhancer.

After the aforementioned components had been mixed at one of the ratios shown in Table I (parts by weight), the resulting mixture was extruded from a biaxial extruder equipped with a vacuum vent at 290 ° C. Thus, a pellet was obtained. After said pellet had been molded from an injection-molding machine (cylinder temperature: 280 ° C; injection pressure: 80 kg/cm$^2$; mold temperature: 60 ° C), a 5 cm x 5 cm x 0.3 cm test piece was obtained.

Subsequently, each of the resulting test pieces underwent a low-temperature (-30 ° C) impact resistance test. In the present test, each test piece was punched at 5 m/sec. Ten test pieces were evaluated in each test, and the breaking state of each test piece was evaluated by the naked eye. At the same time, the breaking energy was measured. Other physical properties (e.g., rigidity, etc.) were also measured. The results are summarized in Table I below.

Table I.

| | APPLICATION EXAMPLE | COMPARATIVE EXAMPLE |
|---|---|---|
| POLYPHENYLENE ETHER | 43 | 43 |
| NYLON-6 | 45 | 45 |
| S E P - A | 12 | |
| S E P - B | | 12 |
| CITRIC ACID | 1.4 | 1.4 |
| HIGH-SPEED -30 ° C IMPACT TEST | | |
| BREAKING STATE | FLEXIBLE | BRITTLE |
| ABSORPTION ENERGY | 460 | 308 |
| BENDING ELASTICITY | 21 000 | 17 000 |
| BENDING STRENGTH | 870 | 740 |
| IZOD IMPACT STRENGTH (WITH A NOTCH) | 51 | 71 |

As the results of the foregoing table clearly indicate, a resin composition which yields a molded product with excellent low-temperature impact resistance and minimal rigidity loss can be obtained in the present invention.

## Claims

A resin composition comprising : (a) 5-80 parts by weight of a polyphenylene ether resin, (b) 95-20 parts by weight of a polyamide resin, and (c) 1-80 parts by weight of a rubbery polymer (with respect to 100 parts by weight of the combined weights of said components (a) and (b)), said rubbery polymer containing at least 40 wt% of vinyl aromatic units.